(19) Europäisches Patentamt
European Patent Office
Office européen des brevets

(11) **EP 2 168 326 B1**

(12) **EUROPÄISCHE PATENTSCHRIFT**

(45) Veröffentlichungstag und Bekanntmachung des Hinweises auf die Patenterteilung:
**23.02.2011 Patentblatt 2011/08**

(21) Anmeldenummer: **08759118.6**

(22) Anmeldetag: **09.06.2008**

(51) Int Cl.:
***H04L 12/56*** *(2006.01)*

(86) Internationale Anmeldenummer:
**PCT/EP2008/004587**

(87) Internationale Veröffentlichungsnummer:
**WO 2009/012847 (29.01.2009 Gazette 2009/05)**

(54) **VORRICHTUNG UND VERFAHREN ZUR ERHÖHUNG DES DATENDURCHSATZES IN FUNKNETZEN**

APPARATUS AND METHOD FOR INCREASING THE DATA THROUGHPUT IN RADIO NETWORKS

DISPOSITIF ET PROCÉDÉ PERMETTANT D'AUGMENTER LE DÉBIT DE DONNÉES DANS DES RÉSEAUX RADIO

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **25.07.2007 DE 102007034754**

(43) Veröffentlichungstag der Anmeldung:
**31.03.2010 Patentblatt 2010/13**

(73) Patentinhaber: **Rohde & Schwarz GmbH & Co. KG**
**81671 München (DE)**

(72) Erfinder:
• **STORN, Rainer**
**85551 Kirchheim (DE)**
• **GETTERT, Wolfram**
**82256 Fürstenfeldbruck (DE)**

(74) Vertreter: **Körfer, Thomas**
**Mitscherlich & Partner**
**Patent- und Rechtsanwälte**
**Postfach 33 06 09**
**80066 München (DE)**

(56) Entgegenhaltungen:
**EP-A- 1 458 166        EP-A- 1 601 145**
**WO-A-2005/004432        WO-A-2007/035462**
**US-A1- 2005 021 864**

## Beschreibung

Die Erfindung bezieht sich auf eine Vorrichtung und ein Verfahren zur Erhöhung des Datendurchsatzes in Funknetzen.

Die US 2003/0031208 A1 beschreibt eine Vorrichtung zur Übertragungskontrolle und zum Empfang von Informationsrahmen mittels einer Kommunikationseinrichtung, welche eine Zugehörigkeit zu mindestens einem Kommunikationsnetz aufweist. Die Vorrichtung zur Übertragungskontrolle weist einen Speicherbereich auf, welcher Informationen zwischenspeichert, die zur Übertragung vorgesehen sind. Ferner werden darin Informationen zwischengespeichert, welche gerade empfangen wurden.

Von Nachteil bei dieser Vorrichtung ist, dass auch ein Kanalzugriff erfolgt, wenn keine Informationsdaten übertragen werden. Dadurch ist die Effizienz beim Datendurchsatz verringert, da auch leere Pakete mit Signalisierung versendet werden.

Ferner beschreibt das US-Patent US 6,687,503 B1 ein Verfahren und eine Vorrichtung zur Bereitstellung von drahtlosen Verbindungskanälen zur Netz-Grobstruktur (i.e. Backbone-Netze), insbesondere für eine Anwendung in zellularen Funknetzen. Dabei ist vorgesehen, dass jedes für einen Benutzer vorgesehene Endgerät auch als Netzübergang zur Netz-Grobstruktur verwendet werden kann.

Von Nachteil daran ist, dass der Kanalzugriff durch das TDMA-Verfahren auf jeweils einen Zeitschlitz begrenzt ist. Ferner muss bei jeder Zuteilung eines Zeitschlitzes die Signalisierungsinformation erneut mitgesendet werden, was eine hohe Redundanz nach sich zieht und ebenfalls die Effizienz bei der Nutzdatenübertragung verringert.

Ferner beschreibt EP1601145 A2 eine Vekettungseinheit welche Datenpakete aus den Unter-Warteschlangen entnimmt und diese zu einer MAC-Datenpaketkette verknüpft. Dabei werden Datenpakete entweder mit einer gemeinsamen Zieladresse, einer bestimmten Priorität oder Pakttyp zu einer MAC-Datenpaketkette zusammengefügt. In einem als Aggregationsheader bezeichneten Zusatzheader der MAC-Datenpaketkette wird für jedes enthaltene Datenpaket einzeln dessen Länge in einem 12 Bit langen Informationsfeld angegeben. Von Nachteil bei dieser Vorrichtung ist, dass der Signalisierungsaufwand sehr hoch ist.

Der Erfindung liegt die Aufgabe zu Grunde, eine Vorrichtung und ein Verfahren anzugeben, welches die Nutzdatenrate bei reduziertem Signalisierungsaufwand erhöht und die Effizienz steigert, indem möglichst viele Daten nach einem Kanalzugriff versendet werden.

Bezüglich der Vorrichtung wird die genannte Aufgabe erfindungsgemäß gelöst durch die Merkmale des Anspruchs 1. Bezüglich des Verfahrens wird die genannte Aufgabe erfindungsgemäß gelöst durch die Merkmale des Anspruchs 11 Vorteilhafte Weiterbildungen sind Gegenstand der auf Anspruch 1 bzw. Anspruch 11 rückbezogen Unteransprüche.

So umfasst die erfindungsgemäße Vorrichtung zur Erhöhung des Datendurchsatzes in Funknetzen eine Ablaufsteuerung für die in mehreren Warteschlangen zwischengespeicherten auszusendenden Datenpakete. Die Ablaufsteuerung weist eine Logikeinheit auf und jeweils eine Warteschlange enthält auszusendende Datenpakete mit einer definierten Sendepriorität. Mittels der Logikeinheit ist erfindungsgemäß eine Verkettung mehrerer Datenpakete einer Warteschlange zu einer einzigen auszusendendem Datenpaketkette gemäß zumindest einer implementierten Logikregel vorgesehen.

Es ist von Vorteil, wenn die Ablaufsteuerung verkettete Datenpakete aus den verschiedenen Warteschlangen gemäß ihrer Sendepriorität sequentiell versendet. Somit ist gewährleistet, dass zeitkritische Anwendungen wie Sprachübertragung, Videokonferenz etc. bevorzugt übermittelt werden.

Des weiteren ist es von Vorteil, wenn in der Logikeinheit verschiedene Logikregeln bzw. Methoden für eine Verkettung von einzelnen Datenpaketen vorgesehen sind. Dadurch ist es für das Konfigurationsmanagement möglich, die Verkettungsmethode schnell zu wechseln, wenn die Netzlast dies erfordert.

Außerdem ist es vorteilhaft, wenn in der Logikeinheit gleichartige Datenpakete mit gleichem Ziel zu einer auszusendenden Datenpaketkette verkettet werden. Dadurch muss beispielsweise die Adressierung und sonstige Bestandteile des Steuerkopfes (bzw. des Headers) im auszusendenden Datenpaket nur ein einziges mal mit übertragen werden, was den Signalisierungsaufwand reduziert und sich günstig auf die Übertragungsrate der Nutzdaten auswirkt.

Weiterhin ist es vorteilhaft, wenn in der Logikeinheit eine Verkettung gleichartiger Datenpakete beispielsweise nur Audio-Pakete (Sprachpakete) oder nur Video-Pakete oder nur Daten-Pakete mit gleichem Ziel zu einem Datenpaket bzw. zu einer Datenpaketkette vorgenommen wird, wobei redundante Signalisierung im Steuerkopf (im Header) in der zu sendenden Datenpaketkette unterdrückt ist. Beispielsweise kann bei der Anwendung von Verschlüsselung darauf verzichtet werden, dass Verschlüsselungsinformationen mehrfach gesendet werden, was wiederum den Signalisierungsaufwand reduziert.

Zudem ist es von Vorteil, wenn in der Logikeinheit der erfindungsgemäßen Vorrichtung eine Verkettung verschiedenartiger Datenpakete oder gleichartiger Datenpakete mit gleichem Ziel zu einer auszusendenden Datenpaketkette vorgesehen ist.

Vorteilhaft ist es auch, wenn in der erfindungsgemäßen Vorrichtung eine Obergrenze für eine Anzahl zu verkettender Datenpakete vorgesehen ist, so dass die maximale Kanalzugriffszeit begrenzt ist, und weitere Warteschlangen zügig abgearbeitet werden können.

Ausführungsbeispiele der vorliegenden Erfindung werden nachfolgend beschrieben. Sowohl die Struktur als auch die Arbeitsweise der Erfindung sowie deren weitere Vorteile und Aufgaben sind am besten anhand der folgenden Beschreibung in Verbindung mit der dazugehörigen Zeichnungen verständlich. In der Zeichnung zeigen:

Fig. 1    ein Schema einer Ablaufsteuerung einer erfindungsgemäßen Vorrichtung;

Fig. 2    die Kopfdaten (Header) eines UDP/Ipv6- Datenpakets gemäß dem Stand der Technik;

Fig. 3    die Kopfdaten (Header) eines mit Ipsec verschlüsselten UDP/Ipv6-Datenpakets gemäß dem Stand der Technik;

Fig. 4    die Abhängigkeit der Effizienz einer digitalen Datenübertragung von der Paketgröße und von der Art des gewählten Modulationsverfahrens anhand einer beispielhaften Tabelle für den Standard IEEE 802.11b;

Fig. 5    die Definition verschiedener Datenübertragungsraten anhand des OSI 7- Schichten-Modells;

Fig. 6    die maximale Nutzdatenrate bei einer unverschlüsselten Übertragung in Abhängigkeit vom Datenvolumen der Nutzdatenpakete in einer Tabelle;

Fig. 7    die maximale Nutzdatenrate bei einer verschlüsselten Übertragung in Abhängigkeit vom Datenvolumen der Nutzdatenpakete anhand einer Tabelle;

Fig. 8    ein Schema zur Verkettung von gleichartigen Daten zu einer Datenpaketkette eines ersten Ausführungsbeispiels der erfindungsgemäßen Vorrichtung;

Fig. 9    ein Schema zur Verkettung von gleichartigen Daten zu einer Datenpaketkette eines zweiten Ausführungsbeispiels der erfindungsgemäßen Vorrichtung und

Fig. 10    ein Schema zur Verkettung von verschiedenartigen Daten zu einer Datenpaketkette eines dritten Ausführungsbeispiels der erfindungsgemäßen Vorrichtung.

Einander entsprechende Teile sind in allen Figuren mit den gleichen Bezugszeichen versehen.

Die erfindungsgemäße Vorrichtung zur Erhöhung des Datendurchsatzes in Funknetzen weist eine Ablaufsteuerung 1 auf. Die Ablaufsteuerung 1, die eine Logikeinheit 6 aufweist, disponiert die in mehreren Warteschlangen 2a, 2b, 2c, 2d zwischengespeicherten auszusendenden Datenpakete 3. Jeweils eine Warteschlange 2a, 2b, 2c, 2d enthält auszusendende Datenpakete 3 mit einer definierten Sendepriorität, wobei mittels der Logikeinheit 6 eine Verkettung mehrerer Datenpakete 3 einer Warteschlange 2a, 2b, 2c, 2d zu einer einzigen auszusendende Datenpaketkette 4 vorgesehen ist und verkettete Datenpakete 3 aus den verschiedenen Warteschlangen 2a, 2b, 2c, 2d als eine Datenpaketkette 4 gemäß ihrer Sendepriorität sequentiell versendet werden.

In der Logikeinheit 6 der erfindungsgemäßen Vorrichtung sind vorzugsweise verschiedene Logikregeln bzw. Methoden für eine Verkettung von einzelnen Datenpaketen 3 implementiert.

Ein erstes Ausführungsbeispiel der erfindungsgemäßen Vorrichtung geht davon aus, dass in der Logikeinheit 6 eine Verkettung gleichartiger Datenpakete 3a mit gleichem Ziel zu einer auszusendenden Datenpaketkette 4 vorgesehen ist. Dabei kann redundante Signalisierung in der zu sendenden Datenpaketkette 4, beispielsweise in Abhängigkeit vom Verkehrsaufkommen im Netz weggelassen werden.

Ein zweites Ausführungsbeispiel der erfindungsgemäßen Vorrichtung besteht darin, dass in der Logikeinheit 6 eine Verkettung verschiedenartiger Datenpakete 3b zu einer auszusendenden Datenpaketkette 4 vorgesehen ist, wobei redundante Signalisierung wahlweise verworfen werden kann. Eine Verkettungsregel in der Logikeinheit 6 besteht darin, dass verschiedenartige Datenpakete 3b mit gleichem Ziel zu einer auszusendenden Datenpaketkette 4 zusammengefasst werden, wobei redundante Signalisierung in der zu sendenden Datenpaketkette verworfen ist. Ferner ist in der erfindungsgemäßen Vorrichtung vorzugsweise eine Obergrenze für eine Anzahl zu verkettender Datenpakete 3 vorgesehen.

Die oben aufgeführten Merkmale für die erfindungsgemäße Vorrichtung sind sinngemäß auch in dem erfindungsgemäßen Verfahren enthalten, welches mit der erfindungsgemäßen Vorrichtung in unmittelbaren Zusammenhang steht.

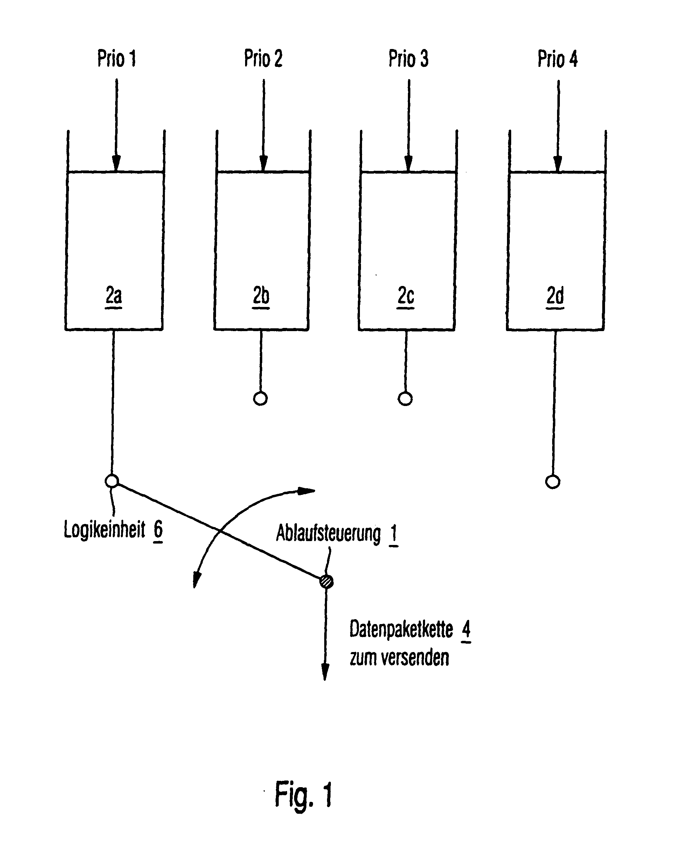

Fig. 1 zeigt ein Schema einer Ablaufsteuerung 1 einer erfindungsgemäßen Vorrichtung bzw. eines erfindungsgemäßen Verfahrens zur Erhöhung des Datendurchsatzes in Funknetzen.

Eines der wichtigsten Ziele in Datennetzen ist es, den Datendurchsatz zu maximieren. Dies trifft insbesondere für Funknetze zu, da das Frequenzspektrum dort eine besonders knappe Ressource darstellt. Der Bedarf nach Datendurchsatzerhöhung ist in sogenannten mobilen AdHoc-Netzen (MANETs, selbstkonfigurierende Funknetze), welche sich spontan (ad hoc) umkonfigurierende Funknetze darstellen, weiter erhöht, da dort die Daten oft über mehrere Funkknoten hinweg transportiert werden müssen. Da Funkknoten i.a. nicht gleichzeitig senden und empfangen können und die Funkknoten nur zu bestimmten Zeitpunkten Zugriff auf die Ressource Frequenzspektrum haben, reduziert sich der Datendurchsatz in MANETs besonders stark, wenn mehrere Funkknoten im Spiel sind.

Bei Datenverkehr über knappe Ressourcen ist das Einbringen von Dienstgüte (Quality of Service = QoS) eine wichtige Maßnahme, um besonders wichtige Informationen bevorzugt zu behandeln. Im taktischen Funk ist z.B. Sprachinformation besonders wichtig und soll daher mit hoher Priorität übertragen werden. Das prioritätsgesteuerte Senden von Nachrichten erfolgt üblicherweise mit verschiedenen Warteschlangen 2a, 2b, 2c, 2d, denen jeweils eine bestimmte Sendepriorität zugeordnet wird, so dass immer Datenpakete 3 einer bestimmten Sendepriorität in die dafür zuständige Warteschlange 2a, 2b, 2c, 2d kommen.

In Fig. 1 sind beispielhaft vier Warteschlangen 2a, 2b, 2c, 2d dargestellt, die jeweils mit Datenpaketen 3 unterschiedlicher Sendepriorität befüllt werden. Eine Ablaufsteuerung 1 entnimmt den Warteschlangen 2a, 2b, 2c, 2d dann die Datenpakete 3 und veranlasst das Versenden. Dabei greift die Ablaufsteuerung 1 öfter auf eine Warteschlange 2a, 2b, 2c, 2d mit hoher Sendepriorität (Prio1 > Prio2 > Prio3 > Prio4) zu als auf eine Warteschlange 2b, 2c, 2d mit niedriger Priorität, wodurch die Datenpakete 3 hoher Priorität, i.e. die Datenpakete 3 in Warteschlange 2a bevorzugt versendet werden.

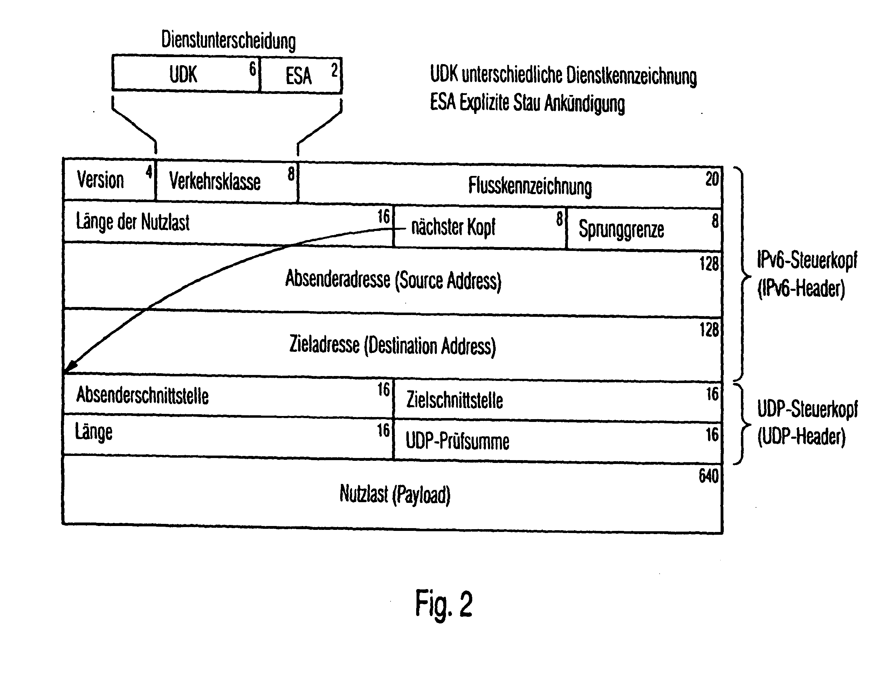

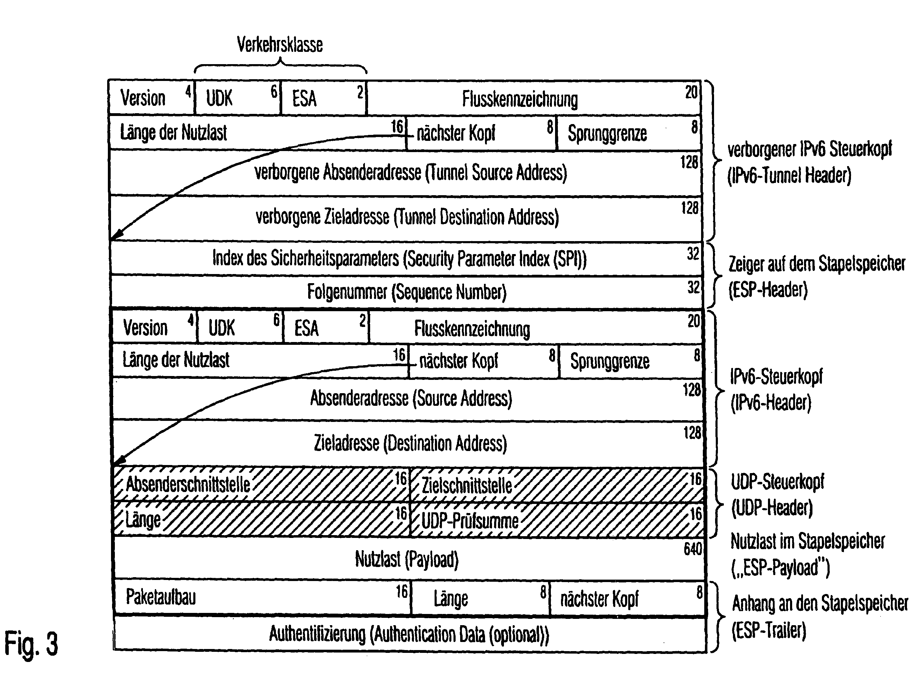

Fig. 2 zeigt die Kopfdaten (Header) bzw. Steuerinformation eines UDP/Ipv6-Datenpakets gemäß dem Stand der Technik. Um Daten in einem Datennetz transportieren zu können, muss neben der eigentlichen Nutzinformation auch Steuerinformation (Overhead, hier 48 Byte) übertragen werden, um den korrekten Transport der Daten in der Netzwerk- und Transportschicht des Übertragungsprotokolls zu gewährleisten. Ein häufig verwendetes Netzwerkprotokoll ist das Internet Protokoll der Version 6 (IPv6), ein häufig verwendetes Transportprotokoll ist UDP. Der Overhead wird weiter erhöht, wenn die eigentlichen Nutzdaten noch verschlüsselt werden sollen. Ein gängiges Verschlüsselungswerkzeug ist Ipsec. Der daraus resultierende Overhead (in diesem Beispiel 100 Byte) ist in Fig. 3 gezeigt.

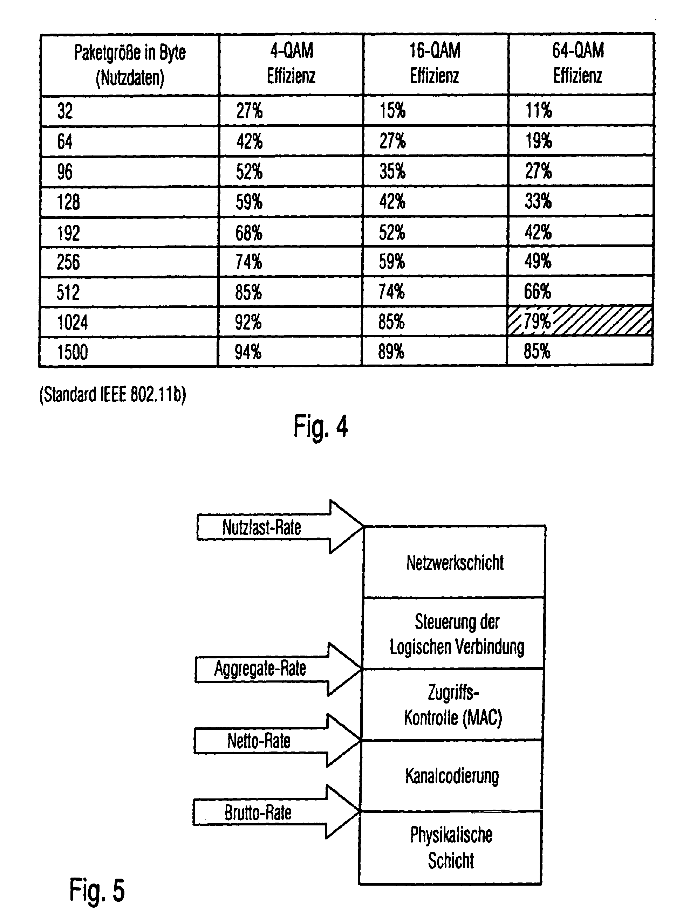

Fig. 4 zeigt beispielhaft anhand einer Tabelle die Abhängigkeit der Effizienz einer digitalen Datenübertragung von der Größe der Datenpakete und von der Art des gewählten Modulationsverfahrens nach dem Standard IEEE 802.11b. Bevor die Ablaufsteuerung 1 Datenpakete zur Versendung bringen kann, muss die MAC-Funktionalität (MAC = Medium Access Control) Zugriff auf die Ressource Frequenzspektrum, i.e. den Funkkanal bekommen. Im Falle von MANETs (Mobile AdHoc Netze, bzw. selbstkonfigurierende Funknetze) wird dies häufig durch ein CSMA-Verfahren (CSMA = Carrier Sense Multiple Access, Vielfachzugriffsverfahren mit Leitungsüberwachung) bewerkstelligt. Die Verluste, die durch Wartezeiten auf den Funkkanal-Zugriff entstehen, lassen sich statistisch durch Effizienzwerte fassen. Ein Beispiel hierfür ist in Fig. 4 dargestellt. Es ist deutlich zu sehen, dass insbesondere für kleine Datenpakete die Effizienz stark abnimmt, wobei die Übertragung im unbestätigten Modus erfolgt ist.

Fig. 5 zeigt anhand des OSI 7-Schichten-Modells die Definition verschiedener Datenübertragungsraten. Es soll nun auf die Verhältnisse der Nettodatenrate, also jener Datenrate, mit der uncodierte Bits über den Funkkanal gesendet werden können, und der eigentlichen Nutzdatenrate eingegangen werden. Die Definitionen sind wie folgt:

Maximale Brutto-Datenrate:

Die maximale Bruttodatenrate errechnet sich aus folgenden beispielhaften Kennzahlen eines Breitband-Modems:

1. Anzahl N der Datenträger, wobei z.B, N=40 gilt
2. Maximale Anzahl $b_N$ an Bits pro Datenträger, wobei z.B. $b_{N,max}$ = 6 gilt
3. Symboldauer $T_s$ = 1 $\mu s$ +12,5 $\mu s$ = 112,5 $\mu s$ Damit ist die maximale Brutto-Datenrate $R_b$:

$$R_{b,max} = \frac{N \cdot b_{N,max}}{T_S} = \frac{1 \cdot 6 bit}{1 \mu s} = 6 \frac{Mbit}{s}$$

Maximale Netto-Datenrate:

Die maximale Nettodatenrate $R_n$ errechnet sich aus der Bruttodatenrate $R_b$ sowie der Coderate $R_c$. Es gilt

$$R_{n,\max} = R_{b,\max} \cdot R_c = 6\frac{Mbit}{s} \cdot \frac{1}{2} = 3\frac{Mbit}{s}$$

Mit $R_c=1/2$.

Maximale Aggregate-Rate:

Die aggregierte Rate oder "Aggregate-Rate" $R_a$ ist jene Datenrate, die sich aus der Rate der Nutzdaten (Payload) und der Overhead-Rate ergibt. Die Overhead-Rate $R_o$ resultiert aus dem Protokolloverhead der Netzwerk- und Transportschicht. Die maximale Aggregate-Rate ergibt sich aus der maximalen Netto-Datenrate gemindert durch den MAC-Overhead, der sich aus dem MAC-Protokoll ergibt. Da das verwendete MAC-Zugriffsverfahren (CSMA/CA) ein statistisches Verfahren ist, kann der MAC-Overhead nur gemittelt angegeben werden. Der MAC-Overhead ist minimal, falls nur zwei Knoten an der Kommunikation teilnehmen.
Hierfür gilt

$$R_{a,\max} = R_{n,\max} \cdot K_{MAC}$$

Der Faktor $K_{MAC}$ gibt die Effizienz an und ergibt sich aus relativ komplexen theoretischen Überlegungen, die für den Fall der höchstmöglichen Datenrate (64-QAM, bestätigte MAC-Übertragung) bei einer Paketgröße von 1024 Byte 79% beträgt (siehe Fig. 4).
Für das gewählte Beispiel ergibt sich damit

$$R_{a,\max} = R_{n,\max} \cdot K_{MAC} = 3\frac{Mbit}{s} \cdot 0,79 \approx 2,37\frac{Mbit}{s}$$

Maximale Payload-Rate

Die maximal mögliche Payload-Rate ergibt sich aus

$$R_{p,\max} = R_{a,\max} \cdot \frac{M_{payload}}{M_{payload} + M_{overhead}} = 2,37\frac{Mbit}{s} \cdot \frac{1024-48}{1024} \approx 2,29\frac{Mbit}{s}$$

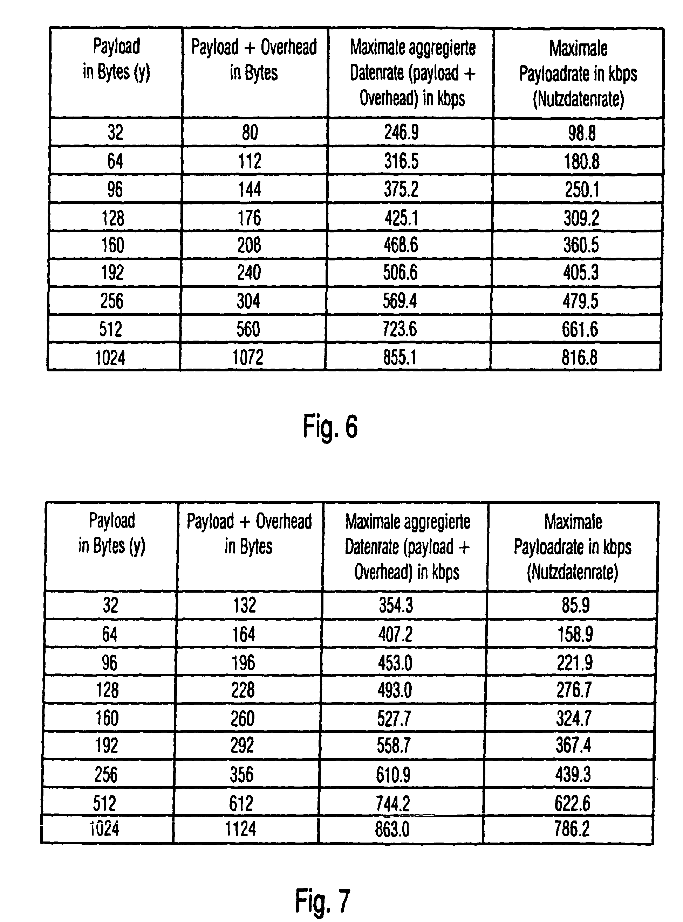

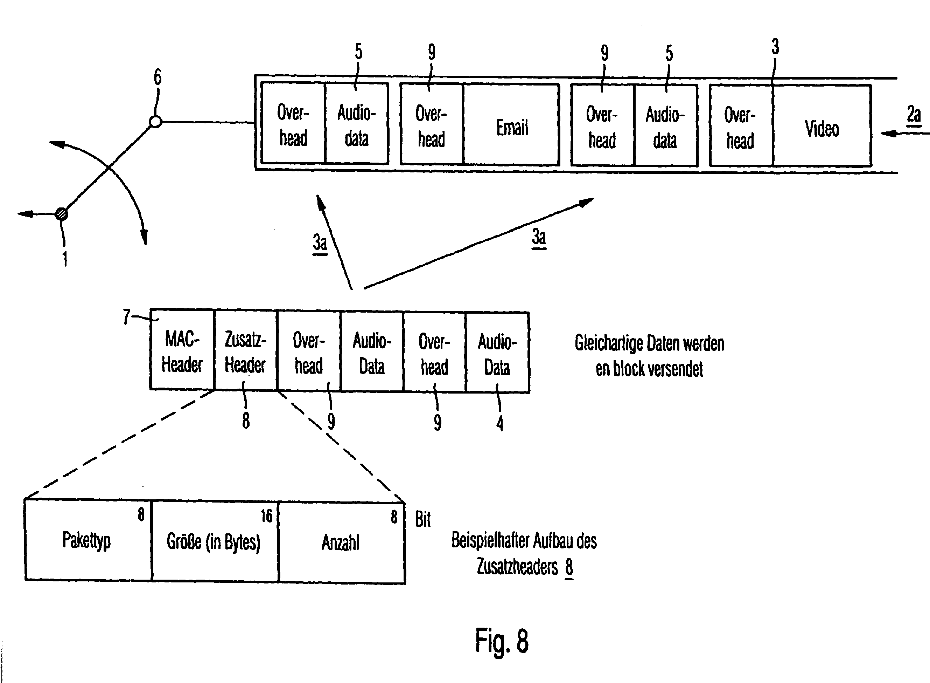

wobei die Größen $M_{payload}$ und $M_{overhead}$ die Anzahl Bytes von Payload und Overhead in einem Datenpaket darstellen, welches an die MAC-Schicht übergeben wird. In Fig. 6 und Fig. 7 ist der erreichbare Nutzdatendurchsatz bzw. die Nutzdatenrate für verschiedene Fälle aufgelistet.
Fig. 6 zeigt die Verbesserung der maximalen Nutzdatenrate bei einer unverschlüsselten Übertragung in Abhängigkeit vom Datenvolumen der Nutzdatenpakete. Die Übertragung erfolgt bestätigt zwischen zwei Funkknoten mit einer Nettodatenrate von 3 Mbps und einer Modulation mit dem 64-QAM-Verfahren.
Fig. 7 zeigt die maximale Nutzdatenrate in Abhängigkeit vom Datenvolumen der Nutzdatenpakete. Die Übertragung erfolgt verschlüsselt und bestätigt zwischen zwei Funkknoten mit zwei Zwischenknoten, einer Nettodatenrate von 3 Mbps und einer Modulation mit dem 64-QAM-Verfahren.
Insbesondere bei kleinen Größen der Nutzdaten (z.B. 32 Byte, die einer häufigen Größe bei Sprachdaten entspricht) bleibt nur noch wenig an effektiver Nutzdatenrate übrig, obwohl die Nettodatenrate im gewählten Beispiel 3 Mbps beträgt. Die Hauptursachen des Datenratenverlustes sind: die geringe Effizienz (siehe Fig. 4), die Übertragung über mehrere Zwischenknoten und der Overhead durch die Header (Kopfdaten von IPv6, evtl. IPsec und UDP.
Die erfindungsgemäße Vorrichtung bzw. das erfindungsgemäße Verfahren wirkt dem Datenratenverlust entgegen. Fig. 8 zeigt ein Schema zur Verkettung von gleichartigen Daten 3a zu einer einzigen auszusendenden Datenpaketkette 4 eines ersten Ausführungsbeispiels der erfindungsgemäßen Vorrichtung bzw. des erfindungsgemäßen Verfahrens.
Dabei werden zwei Sprachdatenpakete 5 in einer auszusendenden Datenpaketkette 4 zusammengefasst, wobei diese Datenpaketkette 4 zusätzlich zu den Steuerinhalten 9 der einzelnen Sprachpakete einen MAC-Header 7 (Kopfdaten für den Zugriff) und einen Zusatzheader 8 enthält. Der Zusatzheader 8 gibt den Pakettyp (hier Audio-Data, Sprachdaten), das Datenvolumen in Bytes und die Anzahl (hier zwei) der in einer Datenpaketkette 4 zusammengefassten Datenpakete 3a (i.e. Sprachdatenpakete 5) an. Insgesamt umfasst der Zusatzheader 8 ein Datenvolumen von vier Bytes.

Es werden im Folgenden einige Vorschläge zur Durchsatzerhöhung gemacht, die alle darauf basieren, dass nach dem Gewinn des Funkkanalzugriffs auf MAC-Ebene nicht nur ein Datenpaket 3 aus der von der Ablaufsteuerung 1 momentan abgearbeiteten Warteschlange 2a, 2b, 2c, 2d gesendet wird, sondern mehrere Datenpakete 3 zusammengefasst gesendet werden, sofern Datenpakete 3 in der entsprechenden Warteschlange 2a, 2b, 2c, 2d vorhanden sind.

Fig. 8 zeigt eine Verkettung gleichartiger Datenpakete 3a mit gleichem Ziel, wobei das aktuelle Datenpaket 3 jener Warteschlange 2a, 2b, 2c, 2d, die von der Ablaufsteuerung 1 ausgewählt wurde, in der Logikeinheit 6 nach Zieladresse und Typ analysiert wird. In der Warteschlange 2a, 2b, 2c, 2d wird untersucht, ob es weitere Datenpakete desselben Typs (z.B. Audio, Video, Email) und derselben Zieladresse gibt. Gerade bei Sprachübertragung ist dies ein wahrscheinlicher Fall, da Sprachdatenpakete 5 in kleine Datenpakete 3a zerhackt sind. Die in der Warteschlange 2a, 2b, 2c, 2d vorhandenen Datenpakete 3a des untersuchten Typs mit gemeinsamer Zieladresse werden gemeinsam versendet, so dass vorteilhafterweise keine getrennten Kanalzugriffe nötig sind. Mit einem Zusatzheader 8 wird gekennzeichnet, welcher Datentyp in welcher Vielfachheit verschickt wird. Für die Anzahl der gemeinsam zu versendenden Pakete ist eine Obergrenze vorgesehen, um die zeitliche Dauer des Kanalzugriffs für eine Warteschlange 2a, 2b, 2c, 2d nicht übermäßig auszudehnen.

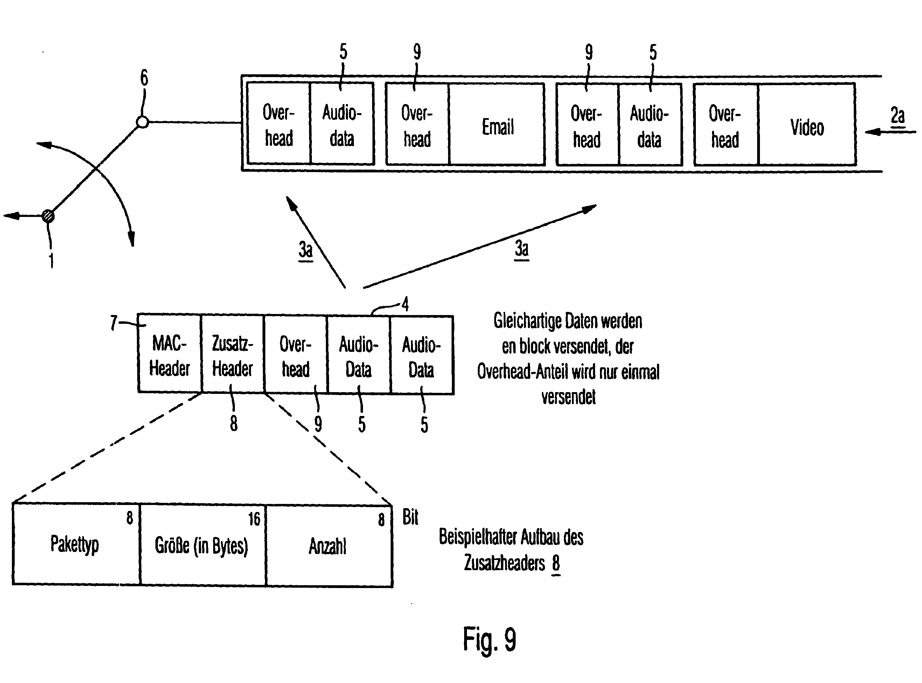

Fig. 9 zeigt ein Schema zur Verkettung von gleichartigen Daten 3a zu einer Datenpaketkette 4 eines zweiten Ausführungsbeispiels der erfindungsgemäßen Vorrichtung und des erfindungsgemäßen Verfahrens. Gleichartige Datenpakete 3a werden dabei en block versendet, wobei im Unterschied zum ersten Ausführungsbeispiel der Erfindung der Overhead-Anteil 9 der beiden Sprachpakete 5 nur einmal gesendet wird.

Dieses Ausführungsbeispiel geht von einer Verkettung gleichartiger Datenpakete 3a aus, wobei der Header bzw. die Signalisierungspakete 9 der gemeinsamen Datenpakete 3a aber nur einmal gesendet wird, da die Information aufgrund des gleichen Datentyps sowie der gleichen Zieladresse redundant ist (Header-Reuse). Zusätzlich zum Header-Reuse kann auch noch eine IP-Header-Kompression verwendet werden, um den Anteil der tatsächlich zu übertragenden Nutzdaten noch weiter zu erhöhen. Vernachlässigt man den Zusatzheader 8, sieht man anhand von Fig. 6 und Fig. 7, dass sich der Nutzdatendurchsatz bereits nahezu verdoppelt, wenn man anstatt einem Nutzdaten-Paket von 32 Bytes zwei Pakete, also 64 Bytes versendet. Sendet man drei anstatt zwei Pakete, erhöht sich der Nutzdatendurchsatz noch einmal um fast 50%. Die Durchsatzerhöhung reduziert sich durch Hinzunahme weiterer Datenpakte 3. Dieser Trend ist sehr vorteilhaft, da gerade eine Zusammenfassung von wenigen Datenpaketen 3 den Durchsatz besonders kräftig erhöht, was die Anwendbarkeit erfindungsgemäßen Vorrichtung bzw. des erfindungsgemäßen Verfahrens begünstigt.

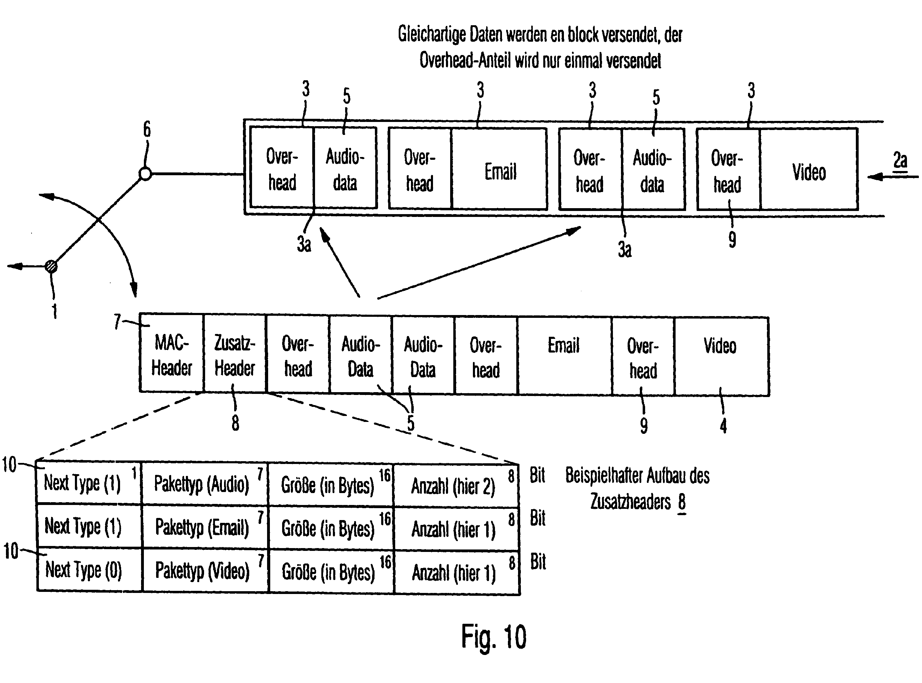

Fig. 10 zeigt ein Schema zur Verkettung von verschiedenartigen Datenpaketen 3b zu einer Datenpaketkette 4 eines dritten Ausführungsbeispiels der erfindungsgemäßen Vorrichtung bzw. des erfindungsgemäßen Verfahrens

In diesem dritten Ausführungsbeispiel werden drei verschiedene Pakettypen zu einer Datenpaketkette 4 zusammengefasst, wobei in dem Byte, welches zur Definition des Pakettyps (Audio, Email oder Video) vorgesehen ist, ein Bit reserviert ist. Dieses reservierte Bit, bzw. das Steuerbit 10, welches in Fig. 10 als Next Type Bit bezeichnet wird, ist auf "1" gesetzt, wenn in der zu übertragenden Datenpaketkette 4 noch ein weiterer Pakettyp vorhanden ist. Ansonsten wird dieses Bit auf "0" gesetzt. Insgesamt weist der Zusatzheader 8 dieses Datenpakets ein Datenvolumen auf, welches von der Anzahl der verschiedenen Pakettypen abhängig ist. Bei dem in Fig. 10 gezeigten Ausführungsbeispiel beträgt das Datenvolumen 3*4 Bytes.

Das dritte Ausführungsbeispiel der Erfindung stützt sich auf eine Verkettung verschiedenartiger Datenpakete 3b mit Header-Reuse. Das Senden eines Funkknotens auf MAC-Ebene erfolgt generell im Broadcast-Modus, so dass beim gemeinsamen Versenden nicht notwendigerweise auf die Zieladresse geachtet werden muss. Die Empfänger müssen allerdings darauf achten, Datenpakete, die nicht an sie gerichtet sind, auszusortieren. Diese Funktionalität ist auf MAC-Ebene ohnehin vorhanden, müsste aber beim gemeinsamen Senden verschiedener Datenpakete 3b modifiziert werden. Je nach Füllstand einer Warteschlange 2a, 2b, 2c, 2d ist die Versendung von Paketen begrenzt, sobald ein bestimmter Maximalwert an Bytes überschritten ist.

Die erfindungsgemäße Vorrichtung geht davon aus, dass die auszusendende Datenpaketkette 4 neben einem MAC-Steuerkopf 7 (MAC-Header) einen zusätzlichen Steuerkopf 8 (Zusatzheader) enthält, wobei nach dem Steuerkopf 8 bzw. dem Zusatzheader zumindest ein Signalisierungspaket 9 (Overhead) vorgesehen ist. Der zusätzliche Steuerkopf 8 gibt für die daran angeschlossene Datenpaketkette 4 ihren Pakettyp, ihr Datenvolumen in Bytes und die Anzahl der in ihr enthaltenen Datenpakete 3 an. Des weiteren ist im dritten Ausführungsbeispiel der erfindungsgemäßen Vorrichtung bzw. des erfindungsgemäßen Verfahrens im zusätzlichen Steuerkopf 8 ein Steuerbit 10 zur Anzeige eines weiteren Pakettyps innerhalb der Datenpaketkette 4 vorgesehen.

Die Erfindung ist nicht auf die in der Zeichnung dargestellten Ausführungsbeispiele, insbesondere nicht auf selbstkonfigurierende Funknetze beschränkt, sondern ist auch auf Funknetze anwendbar, welchen eine fest installierte Infrastruktur zu Grunde liegt. Alle vorstehend beschriebenen und/oder in der Zeichnung dargestellten Merkmale sind im Rahmen der Erfindung beliebig miteinander kombinierbar.

**Patentansprüche**

1. Vorrichtung zur Erhöhung des Datendurchsatzes in Funknetzen mit einer Ablaufsteuerung (1) für in mehreren Warteschlangen (2a, 2b, 2c, 2d) zwischengespeicherte auszusendenden Datenpakete (3), wobei jeweils eine Warteschlange (2a, 2b, 2c, 2d) die auszusendenden Datenpakete (3) mit einer definierten Sendepriorität enthält, wobei die Ablaufsteuerung (1) eine Logikeinheit (6) aufweist und die Logikeinheit (6) mehrere Datenpakete (3) einer Warteschlange (2a, 2b, 2c, 2d) zu einer Datenpaketkette (4) gemäß zumindest einer vorgegebenen Logikregel verkettet,
   **dadurch gekennzeichnet**
   **dass** die auszusendende Datenpaketkette (4) neben einem MAC-Steuerkopf (7) (MAC-Header) einen zusätzlichen Steuerkopf (8) (Zusatzheader) enthält,
   **dass** der zusätzliche Steuerkopf (8) für die daran angeschlossene Datenpaketkette (4) ihren Pakettyp, ihr Datenvolumen, vorzugsweise in Byte, und die Anzahl der in ihr enthaltenen Datenpakete (3) angibt und
   **dass** der zusätzliche Steuerkopf (8) ein Steuerbit (10) zur Anzeige eines weiteren Pakettyps innerhalb der Datenpaketkette (4) enthält.

2. Vorrichtung nach Anspruch 1,
   **dadurch gekennzeichnet,**
   **dass** die Ablaufsteuerung (1) Datenpaketketten (3) aus den verschiedenen Warteschlangen (2a, 2b, 2c, 2d) gemäß ihrer Sendepriorität sequentiell versendet.

3. Vorrichtung nach Anspruch 1 oder 2,
   **dadurch gekennzeichnet,**
   **dass** in der Logikeinheit (6) verschiedene Logikregeln für eine Verkettung von einzelnen Datenpaketen (3) vorgesehen sind.

4. Vorrichtung nach einem der Ansprüche 1 bis 3,
   **dadurch gekennzeichnet,**
   **dass** in der Logikeinheit (6) eine Verkettung gleichartiger Datenpakete (3a) mit gleichem Ziel zu einer Datenpaketkette (4) vorgesehen ist.

5. Vorrichtung nach Anspruch 4,
   **dadurch gekennzeichnet,**
   **dass** eine redundante Signalisierung in der zu sendenden Datenpaketkette (4) weggelassen ist.

6. Vorrichtung nach Anspruch 4 oder 5, **dadurch gekennzeichnet,**
   **dass** die Gleichartigkeit der Datenpakete (3b) durch eine gleichartige Nutzlast (payload), insbesondere als gleichartige Audiodaten oder gleichartige Videodaten oder gleichartige Vermittlungsdaten gegeben ist.

7. Vorrichtung nach einem der Ansprüche 1 bis 3,
   **dadurch gekennzeichnet,**
   **dass** in der Logikeinheit (6) eine Verkettung verschiedenartiger Datenpakete (3b) mit gleichem Ziel zu einer auszusendenden Datenpaketkette (4) vorgesehen ist.

8. Vorrichtung nach Anspruch 6 oder 7,
   **dadurch gekennzeichnet,**
   **dass** eine redundante Signalisierung in der zu sendenden Datenpaketkette (4) weggelassen ist.

9. Vorrichtung nach Anspruch 1,
   **dadurch** gekennzeichnet,
   dass die Datenpaketkette (4) nach dem Steuerkopf (8) nur ein Signalisierungspaket (9) (Overhead) enthält.

10. Vorrichtung nach einem der Ansprüche 1 bis 9, **dadurch gekennzeichnet,**
    **dass** eine Obergrenze für eine Anzahl zu verkettender Datenpakete (3) vorgesehen ist.

**11.** Verfahren zur Erhöhung des Datendurchsatzes in Funknetzen mit folgenden Verfahrensschritten:

- in mehreren Warteschlangen (2a, 2b, 2c, 2d) werden Datenpakete (3) zwischengespeichert, wobei jeweils eine Warteschlange (2a, 2b, 2c, 2d) die Datenpakete (3) mit einer definierten Sendepriorität enthält,
- eine Logikeinheit (6) verkettet mehrere Datenpakete (3) einer Warteschlange (2a, 2b, 2c, 2d) gemäß zumindest einer vorgegebenen Logikregel zu einer einzigen auszusendenden. Datenpaketkette (4)
- eine Ablaufsteuerung (1) versendet die Datenpaketkette (4) einer bestimmten Warteschlange (2a, 2b, 2c, 2d)
**dadurch gekennzeichnet**
**dass** in die auszusendende Datenpaketkette (4) neben einem MAC-Steuerkopf (7) (MAC-Header) ein zusätzlicher Steuerkopf (8) (Zusatzheader) eingefügt wird,
**dass** der zusätzliche Steuerkopf (8) für die daran angeschlossene Datenpaketkette (4) ihren Pakettyp, ihr Datenvolumen, vorzugsweise in Bytes, und die Anzahl der in ihr enthaltenen Datenpakete (3) angibt und
**dass** im zusätzlichen Steuerkopf (8) ein Steuerbit (10) zur Anzeige eines weiteren Pakettyps innerhalb der Datenpaketkette (4) eingefügt wird.

**12.** Verfahren nach Anspruch 11,
**dadurch gekennzeichnet,**
**dass** die Datenpaketkette (4) aus den verschiedenen Warteschlangen (2a, 2b, 2c, 2d) von der Ablaufsteuerung (1) gemäß ihrer Sendepriorität sequentiell versendet werden.

**13.** Verfahren nach Anspruch 11 oder 12,
**dadurch gekennzeichnet,**
**dass** in der Logikeinheit (6) verschiedene Logikregel für eine Verkettung von einzelnen Datenpaketen (3) einer Warteschlange (2a, 2b, 2c, 2d) angewandt werden.

**14.** Verfahren nach einem der Ansprüche 11 bis 13, **dadurch gekennzeichnet,**
**dass** in der Logikeinheit (6) gleichartige Datenpakete (3a) einer Warteschlange (2a, 2b, 2c, 2d) mit gleichem Ziel zu einer auszusendenden Datenpaketkette (4) verkettet werden.

**15.** Verfahren nach Anspruch 14,
**dadurch gekennzeichnet,**
**dass** eine redundante Signalisierung in der zu sendenden Datenpaketkette (4) bei der Verkettung gelöscht wird.

**16.** Verfahren nach Anspruch 14 oder 15,
**dadurch gekennzeichnet,**
**dass** die Gleichartigkeit der Datenpakete (3b) durch eine gleichartige Nutzlast (payload), insbesondere als gleichartige Audiodaten oder gleichartige Videodaten oder gleichartige Vermittlungsdaten definiert wird.

**17.** Verfahren nach einem der Ansprüche 11 bis 13, **dadurch gekennzeichnet,**
**dass** in der Logikeinheit (6) verschiedenartige Datenpakete (3b) einer oder mehrerer Warteschlangen (2a, 2b, 2c, 2d) mit gleichem Ziel zu einer auszusendenden Datenpaketkette (4) verkettet werden.

**18.** Verfahren nach Anspruch 17,
**dadurch gekennzeichnet,**
**dass** eine redundante Signalisierung in der zu sendenden Datenpaketkette (4) gelöscht wird.

**19.** Verfahren nach Anspruch 11,
**dadurch gekennzeichnet,**
**dass** in die Datenpaketkette (4) nur ein Signalisierungspaket (9) (Overhead) eingefügt wird, welche nach dem Steuerkopf (8) angeordnet wird.

**20.** Verfahren nach einem der Ansprüche 11 bis 19, **dadurch gekennzeichnet,**
**dass** eine Anzahl zu verkettender Datenpakete (3) durch eine Obergrenze begrenzt wird.

**Claims**

1. A device for increasing the data throughput in radio networks with a sequential-control system (1) for data packets (3) buffered in several queues (2a, 2b, 2c, 2d) to be transmitted, wherein each queue (2a, 2b, 2c, 2d) contains the data packets (3) to be transmitted with a defined transmission priority,
wherein the sequential-control system (1) provides a logic unit (6), and the logic unit (6) links several data packets (3) of a queue (2a, 2b, 2c, 2d) to form a data-packets chain (4) according to at least one specified logic rule,
**characterised in that**,
alongside a MAC header (7) (MAC-header), the data-packet chain (4) to be transmitted contains an additional header (8) (additional header), that, for the data-packet chain (4) attached to it, the additional header (8) indicates its packet type, its data volume, preferably in bytes, and the number of data packets (3) contained in it, and that the additional header (8) contains a control bit (10) for the display of a further packet type within the data-packet chain (4).

2. The device according to claim 1,
**characterised in that**
the sequential-control system (1) transmits data-packet chains (3) from the different queues (2a, 2b, 2c, 2d) in a sequential manner according to their transmission priority.

3. The device according to claim 1 or 2, **characterised in that**
different logic rules for a linking of individual data packets (3) are provided in the logic unit (6).

4. The device according to any one of claims 1 to 3, **characterised in that**
a linking of same-type data packets (3a) with the same destination to form a data-packet chain (4) is provided in the logic unit (6).

5. The device according to claim 4,
**characterised in that**
a redundant signalisation in the data-packet chain (4) to be transmitted is omitted.

6. The device according to claim 4 or 5, **characterised in that**
the identity of type of the data packets (3b) is given by a same-type payload (payload), in particular, as same-type audio data or same-type video data or same-type network data.

7. The device according to any one of claims 1 to 3, **characterised in that**
a linking of different-type data packets (3b) with the same destination to form a data-packet chain (4) to be transmitted is provided in the logic unit (6).

8. The device according to claim 6 or 7, **characterised in that**
a redundant signalisation in the data-packet chain (4) to be transmitted is omitted.

9. The device according to claim 1,
**characterised in that**,
after the header (8), the data-packet chain (4) contains only a signalisation packet (9) (overhead).

10. The device according to any one of claims 1 to 9, **characterised in that**
an upper limit for a number of data packets (3) to be linked is provided.

11. A method for increasing the data throughput in radio networks with the following method steps:

- data packets (3) are buffered in several queues (2a, 2b, 2c, 2d), wherein each queue (2a, 2b, 2c, 2d) contains the data packets (3) with a defined transmission priority,
- a logic unit (6) links several data packets (3) of a queue (2a, 2b, 2c, 2d) according to at least one specified logic rule to form a single data-packet chain (4) to be transmitted,
- a sequential-control system (1) transmits the data-packet chain (4) of a given queue (2a, 2b, 2c, 2d),
**characterised in that**,
alongside a MAC header (7) (MAC-header), an additional header (8) (additional header) is inserted into the data-packet chain (4) to be transmitted,
that, for the data-packet chain (4) attached to it, the additional header (8) indicates its packet type, its data volume, preferably in bytes, and the number of data packets (3) contained in it, and that a control bit (10) for the display of a further packet type within the data-packet chain (4) is inserted into the additional header (8).

**12.** The method according to claim 11,
**characterised in that**
the data-packet chains (4) are transmitted from the various queues (2a, 2b, 2c, 2d) by the sequential-control system (1) in a sequential manner according to their transmission priority.

**13.** The method according to claim 11 or 12, **characterised in that**,
within the logic unit (6), various logic rules are applied for a linking of individual data packets (3) of a queue (2a, 2b, 2c, 2d).

**14.** The method according to any one of claims 11 to 13, **characterised in that**,
within the logic unit (6), same-type data packets (3a) of a queue (2a, 2b, 2c, 2d) with the same destination are linked to form a data-packet chain (4) to be transmitted.

**15.** The method according to claim 14,
**characterised in that**
a redundant signalisation in the data-packet chain (4) to be transmitted is deleted during the linking.

**16.** The method according to claim 14 or 15, **characterised in that**
the identity of type of the data packets (3b) is defined by a same-type payload (payload), in particular, as same-type audio data or same-type video data or same-type network data.

**17.** The method according to any one of claims 11 to 13, **characterised in that**,
within the logic unit (6), different-type data packets (3b) of one or more queues (2a, 2b, 2c, 2d) with the same destination are linked to form a data-packet chain (4) to be transmitted.

**18.** The method according to claim 17,
**characterised in that**
a redundant signalisation in the data-packet chain (4) to be transmitted is deleted.

**19.** The method according to claim 11,
**characterised in that**
only one signalisation packet (9) (overhead), which is arranged after the header (8), is inserted into the data-packet chain (4).

**20.** The method according to any one of claims 11 to 19, **characterised in that**
a number of data packets (3) to be linked is limited by an upper limit.

**Revendications**

**1.** Dispositif en vue d'augmenter le débit de données dans des réseaux radio comportant une commande séquentielle (1) pour des paquets de données (3) à envoyer mis en mémoire tampon dans plusieurs files d'attente (2a, 2b, 2c, 2d), dans lequel une file d'attente respective (2a, 2b, 2c, 2d) contient les données de paquet à envoyer (3) avec une priorité d'envoi définie,
dans lequel la commande séquentielle (1) présentent une unité logique (6) et l'unité logique (6) concatène plusieurs paquets de données (3) d'une file d'attente (2a, 2b, 2c, 2d) en une chaîne de paquets de données (4) selon au moins une règle logique prédéterminée,
**caractérisé en ce que**
la chaîne de paquets de données à envoyer (4) comporte un en-tête de commande supplémentaire (8) (en-tête supplémentaire) en plus d'un en-tête de commande MAC (7) (en-tête MAC),
**en ce que** l'en-tête de commande supplémentaire (8) indique pour la chaîne de paquets de données (4) associée, son type de paquet, son volume de données, de préférence en octets, et le nombre de paquets de données (3) qu'elle contient et
**en ce que** l'en-tête de commande supplémentaire (8) comprend un bit de commande (10) pour annoncer un autre type de paquet à l'intérieur de la chaîne de paquets de données (4).

**2.** Dispositif selon la revendication 1, **caractérisé en ce que**
la commande séquentielle (1) envoie les chaînes de paquets de données (3) depuis les différentes files d'attente (2a, 2b, 2c, 2d) séquentiellement selon leur priorité d'envoi.

**3.** Dispositif selon la revendication 1 ou 2, **caractérisé en ce que**
différentes règles logiques sont prévues pour une concaténation de différents paquets de données (3) dans l'unité logique (6).

**4.** Dispositif selon l'une des revendications 1 à 3, **caractérisé en ce que**
une concaténation de paquets de données semblables (3a) avec la même cible dans une chaîne de paquets de données (4) est prévue dans l'unité logique (6).

**5.** Dispositif selon la revendication 4, **caractérisé en ce que**
une signalisation redondante est supprimée dans la chaîne de paquets de données (4) à envoyer.

**6.** Dispositif selon la revendication 4 ou 5, **caractérisé en ce que**
la similarité des paquets de données (3b) est attribuée par une charge utile similaire (payload), en particulier sous la forme de données audio similaires ou de données vidéo similaires ou de données de commutation similaire.

**7.** Dispositif selon l'une des revendications 1 à 3, **caractérisé en ce que**
une concaténation de différents paquets de données (3b) avec la même cible dans une chaîne de paquets de données à envoyer (4) est prévue dans l'unité logique (6).

**8.** Dispositif selon la revendication 6 ou 7, **caractérisé en ce que**
une signalisation redondante est supprimée dans la chaîne de paquets de données à envoyer (4).

**9.** Dispositif selon la revendication 1, **caractérisé en ce que**
la chaîne de paquets de données (4) comporte, après l'en-tête de commande (8), uniquement un paquet de signalisation (9) (Overhead).

**10.** Dispositif selon l'une des revendications 1 à 9, **caractérisé en ce que**
une limite supérieure est prévue pour un certain nombre de paquets de données à concaténer (3).

**11.** Procédé en vue d'augmenter le débit de données dans des réseaux radio comportant les étapes de procédé suivantes :

dans plusieurs files d'attente (2a, 2b, 2c, 2d) sont mises en mémoire tampon des données de paquet (3), dans lequel une file d'attente respective (2a, 2b, 2c, 2d) comporte les paquets de données (3) avec une priorité d'envoi définie,
une unité logique (6) concatène plusieurs paquets de données (3) d'une file d'attente (2a, 2b, 2c, 2d) selon au moins une règle logique prédéterminée en une chaîne de paquets de données unique à envoyer (4)
une commande séquentielle (1) envoie la chaîne de paquets de données (4) d'une file d'attente déterminée (2a, 2b, 2c, 2d)
**caractérisé en ce que**
un en-tête de commande supplémentaire (8) (en-tête supplémentaire) est ajoutée dans la chaîne de paquets de données à envoyer (4) en plus d'un en-tête de commande MAC (7) (en-tête MAC),
**en ce que** l'en-tête de commande supplémentaire (8) indique pour la chaîne de paquets de données associée (4), son type de paquet, son volume de données, de préférence en octets, et le nombre de paquets de données qu'elle contient (3) et
**en ce qu'**un bit de commande (10) pour annoncer un autre type de paquet à l'intérieur de la chaîne de paquets de données (4) est ajouté dans l'en-tête de commande supplémentaire (8).

**12.** Procédé selon la revendication 11, **caractérisé en ce que**
les chaînes de paquets de données (4) sont envoyées séquentiellement selon leur priorité d'envoi à partir des différentes files d'attente (2a, 2b, 2c, 2d) par la commande séquentielle (1).

**13.** Procédé selon la revendication 11 ou 12, **caractérisé en ce que**
différentes règles logiques sont appliquées pour une concaténation de différents paquets de données (3) d'une file d'attente (2a, 2b, 2c, 2d) dans l'unité logique (6).

**14.** Procédé selon l'une des revendications 11 à 13, **caractérisé en ce que**
des paquets de données similaires (3a) d'une file d'attente (2a, 2b, 2c, 2d) avec la même cible dans une chaîne de paquets de données à envoyer (4) sont concaténés dans l'unité logique (6).

**15.** Procédé selon la revendication 14, **caractérisé en ce que**
une signalisation redondante dans la chaîne de paquets de données à envoyer (4) est supprimée lors de la concaténation.

**16.** Procédé selon la revendication 14 ou 15, **caractérisé en ce que**
la similarité des paquets de données (3b) est définie par une charge utile similaire (payload), en particulier sous la forme de données audio similaires ou de données vidéo similaires ou de données de commutation similaires.

**17.** Procédé selon l'une des revendications 11 à 13, **caractérisé en ce que**
différents paquets de données (3b) d'une ou de plusieurs files d'attente (2a, 2b, 2c, 2d) avec la même cible dans une chaîne de paquets de données à envoyer (4) sont concaténés dans l'unité logique (6).

**18.** Procédé selon la revendication 17, **caractérisé en ce que**
une signalisation redondante est supprimée dans la chaîne de paquets de données à envoyer (4).

**19.** Procédé selon la revendication 11, **caractérisé en ce que**
seul un paquet de signalisation (9) (Overhead), qui est disposé après l'en-tête de commande (8), est ajouté dans la chaîne de paquets de données (4).

**20.** Procédé selon l'une des revendications 11 à 19, **caractérisé en ce que**
un nombre de paquets de données à concaténer (3) est limité par une limite supérieure.

Prio 1          Prio 2          Prio 3          Prio 4

2a              2b              2c              2d

Logikeinheit 6          Ablaufsteuerung 1

Datenpaketkette 4
zum versenden

Fig. 1

Dienstunterscheidung

| UDK | 6 | ESA | 2 |
|-----|---|-----|---|

UDK unterschiedliche Dienstkennzeichnung
ESA Explizite Stau Ankündigung

| Version | 4 | Verkehrsklasse | 8 | Flusskennzeichnung | 20 |
|---------|---|----------------|---|--------------------|----|

| Länge der Nutzlast | 16 | nächster Kopf | 8 | Sprunggrenze | 8 |

Absenderadresse (Source Address) | 128

Zieladresse (Destination Address) | 128

IPv6-Steuerkopf (IPv6-Header)

| Absenderschnittstelle | 16 | Zielschnittstelle | 16 |

| Länge | 16 | UDP-Prüfsumme | 16 |

UDP-Steuerkopf (UDP-Header)

Nutzlast (Payload) | 640

Fig. 2

Fig. 3

| Paketgröße in Byte (Nutzdaten) | 4-QAM Effizienz | 16-QAM Effizienz | 64-QAM Effizienz |
|---|---|---|---|
| 32 | 27% | 15% | 11% |
| 64 | 42% | 27% | 19% |
| 96 | 52% | 35% | 27% |
| 128 | 59% | 42% | 33% |
| 192 | 68% | 52% | 42% |
| 256 | 74% | 59% | 49% |
| 512 | 85% | 74% | 66% |
| 1024 | 92% | 85% | 79% |
| 1500 | 94% | 89% | 85% |

(Standard IEEE 802.11b)

## Fig. 4

Nutzlast-Rate → Netzwerkschicht

Aggregate-Rate → Steuerung der Logischen Verbindung / Zugriffs-Kontrolle (MAC)

Netto-Rate →

Brutto-Rate → Kanalcodierung / Physikalische Schicht

## Fig. 5

| Payload in Bytes (y) | Payload + Overhead in Bytes | Maximale aggregierte Datenrate (payload + Overhead) in kbps | Maximale Payloadrate in kbps (Nutzdatenrate) |
|---|---|---|---|
| 32 | 80 | 246.9 | 98.8 |
| 64 | 112 | 316.5 | 180.8 |
| 96 | 144 | 375.2 | 250.1 |
| 128 | 176 | 425.1 | 309.2 |
| 160 | 208 | 468.6 | 360.5 |
| 192 | 240 | 506.6 | 405.3 |
| 256 | 304 | 569.4 | 479.5 |
| 512 | 560 | 723.6 | 661.6 |
| 1024 | 1072 | 855.1 | 816.8 |

## Fig. 6

| Payload in Bytes (y) | Payload + Overhead in Bytes | Maximale aggregierte Datenrate (payload + Overhead) in kbps | Maximale Payloadrate in kbps (Nutzdatenrate) |
|---|---|---|---|
| 32 | 132 | 354.3 | 85.9 |
| 64 | 164 | 407.2 | 158.9 |
| 96 | 196 | 453.0 | 221.9 |
| 128 | 228 | 493.0 | 276.7 |
| 160 | 260 | 527.7 | 324.7 |
| 192 | 292 | 558.7 | 367.4 |
| 256 | 356 | 610.9 | 439.3 |
| 512 | 612 | 744.2 | 622.6 |
| 1024 | 1124 | 863.0 | 786.2 |

## Fig. 7

Gleichartige Daten werden
en block versendet

Beispielhafter Aufbau des
Zusatzheaders 8

Fig. 8

Fig. 9

EP 2 168 326 B1

Gleichartige Daten werden en block versendet, der
Overhead-Anteil wird nur einmal versendet

| Over-head | Audio-data | Over-head | Email | Over-head | Audio-data | Over-head | Video |
|---|---|---|---|---|---|---|---|

2a

6

1

7

| MAC-Header | Zusatz-Header | Over-head | Audio-Data | Audio-Data | Over-head | Email | Over-head | Video |
|---|---|---|---|---|---|---|---|---|

8

| Next Type (1) $^1$ | Pakettyp (Audio) $^7$ | Größe (in Bytes) $^{16}$ | Anzahl (hier 2) $^8$ | Bit |
|---|---|---|---|---|
| Next Type (1) | Pakettyp (Email) $^7$ | Größe (in Bytes) $^{16}$ | Anzahl (hier 1) $^8$ | Bit |
| Next Type (0) | Pakettyp (Video) $^7$ | Größe (in Bytes) $^{16}$ | Anzahl (hier 1) $^8$ | Bit |

Beispielhafter Aufbau des
Zusatzheaders 8

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030031208 A1
- US 6687503 B1
- EP 1601145 A2